# EUROPEAN PATENT SPECIFICATION

(11) **EP 2 632 211 B1**
(45) Date of publication and mention of the grant of the patent: **09.08.2017**
(21) Application number: 13168425.0
(22) Date of filing: 25.06.2008
(51) Int. Cl.: H04W 52/58, H04W 52/32

(54) **Improved uplink scheduling in a cellular system**
Verbesserte Planung in Aufwärtsrichtung in einem zellularen System
Programmation améliorée de liaison montante dans un système cellulaire

(30) Priority: 19.03.2008 US 37807 P
(43) Date of publication of application: 28.08.2013
(62) Divisional of application: 08767233.3
(73) Proprietor: Telefonaktiebolaget LM Ericsson (publ), 164 83 Stockholm (SE)
(72) Inventor: Parkvall, Stefan, SE-167 57 BROMMA (SE)
(74) Representative: Ericsson

(56) References cited:
- EP-A- 1 868 301
- US-A1- 2003 207 696
- US-A1- 2008 045 260

## Description

### TECHNICAL FIELD

The present invention discloses a method and a device for use in a wireless cellular access system in which users in a cell in the system receive transmission power control commands on a control channel.

### BACKGROUND

In some cellular access systems, such as, for example, the LTE system, Long Term Evolution, data in both uplink and downlink (i.e. from and to users, respectively) is transmitted on channels which are shared in both frequency and time between multiple users. Examples of shared so called physical channels in the LTE system are the PDSCH and the PUSCH, the Physical Downlink Shared Channel and the Physical UpLink Shared Chanel.

Due to the principle of shared channels, control signalling is necessary, at least in the downlink, i.e. to the users in the cells of an LTE system.

One of the downlink control channels in the LTE system is the PDCCH channel, the Physical Downlink Control Channel. The PDCCH is used to carry downlink control information, DCI, such as, for example, scheduling decisions, transmission power control commands, and other specific control signalling. In more detail, the downlink control information possible to send on the PDCCH includes:
- Downlink scheduling assignments, including resource indication for the PDSCH transport format, hybrid-ARQ information, transport block size, MIMO-related control information if applicable, and PUCCH transmission power control commands, Physical Uplink Control Channel.
- Uplink scheduling grants, including resource indication for the PUSCH, the Physical Uplink Shared Channel, transport format, hybrid-ARQ related information, and PUSCH transmission power control commands.
- Transmission power control commands of groups of user terminals as a complement to the transmission power control commands which are "piggy-backed" with the scheduling decisions.

The PDCCH can use various formats for the DCI. However, regardless of the DCI format, the PDCCH will comprise a so called RNTI, Radio-Network Temporary identifier, which is an identity for the user terminal for which the PDCCH and the associated DCI is intended. In order to enable the use of RNTI, each user terminal in a cell is assigned its own RNTI, the so called C-RNTI, which may be used when making downlink transmissions to that user terminal.

In each so called subframe, a user terminal monitors the PDCCHs in the cell. Upon detecting its own identity, the C-RNTI, in one of the PDCCHs, the user terminal declares the PDCCH contents valid, and follows the contents of the PDCCH.

In the case of the PDCCH contents being downlink scheduling, the user terminal attempts to decode the associated data transmission on PDSCH resources pointed out by the PDCCH. The result of the decoding attempts, i.e. positive acknowledgement, ACK, or negative acknowledgement, NACK, is transmitted in uplink by the user terminal.

Based upon the ACK or NACK, a decision can be made on whether or not to transmit new data, i.e. ACK received, or to retransmit the previous data, i.e. NACK received, indicating that the user terminal's reception was in error. The ACK/NAK is usually transmitted on an uplink control channel known as the PUCCH, Physical Uplink Control Channel. As the reception of ACK/NACK is important for correct operation of the system, it is crucial to adjust the transmission output power of the PUCCH so that the received power is sufficiently high to correctly receive the ACK/NACK, but not so high that unnecessary interference is created in the system.

In order to control the PUCCH output power of user terminals in a cell, the PDCCH comprises two bits which signify the allowed transmission power of the PUCCH for a user terminal. The terminal uses the information given in these two bits to increase or decrease the PUCCH transmission power. In this way, the network can ensure that a proper level of transmission power is used by a terminal for the PUCCH.

The C-RNTI is, as mentioned above, the unique identity of the terminal for downlink addressing purposes. However, in addition to having a C-RNTI for the purposes of downlink "unicast" data, each terminal can also be allocated one or several so called "group RNTIs". A group RNTI is an identity which is common to a plurality of terminals in a cell, and is consequently used to transmit downlink information which is relevant to more than one terminal.

One example of such information is system parameters which are necessary for all the terminals in a cell in order to be able to access the system. Obviously this type of information should be transmitted using an RNTI known by all terminals in the cell. Another example of "multicast" information is paging, which uses the paging channel, the PCH, in which so called paging groups are defined, with each paging group having a common group paging RNTI assigned.

A third example of downlink multicast information is the so called random access response, which uses a random access RNTI. In this case as well, multiple terminals can be addressed by a group RNTI.

Thus, as explained above, a user terminal is required to simultaneously be able to receive unicast data, addressed by the terminal-specific C-RNTI, as well as common data such as system information, addressed by a different and common (non-terminal-specific) RNTI.

Obviously, when several terminals are addressed simultaneously, as a group, they should not transmit any ACK/NACK on the PUCCH, since the network may not be able to tell from which terminal each of the ACK/NACKs originated. For this reason, in the LTE system, the current specification states that no ACK/NACK response should be sent in such a situation. Since no ACK/NACK is transmitted, there is no need for the terminals to adjust the PUCCH transmission power in such a situation.

Power control is for example discussed in EP1868301 for a point- to multipoint services communications system.

### SUMMARY

The current LTE specifications state that a terminal shall always update its transmission power upon reception of a PDCCH command. Thus, when multiple terminals are addressed using a group RNTI, all of the terminals in the group have according to the current solution needed to update their PUCCH transmission power according to the power control command in the PDCCH, which has resulted in undesirable and inaccurate PUCCH power control results in the terminals in the group.

It is therefore an object of the present invention to obviate or reduce the disadvantages of downlink group transmissions, in particular with respect to the adjustment of uplink transmission power, and to provide an improved method and a terminal for a wireless cellular access system.

This object is obtained by the present invention in that it discloses a method for use in a wireless cellular access system, according to which users in a cell in the system receive transmission power control commands on a control channel.

According to the method, the transmission power control commands received by the users comprise an identifier for the intended user or users; the identifier is either an identifier for a specific user or for a group of users, and according to the method of the invention, a user disregards a transmission power control command if the identifier which is comprised in the transmission power control command is for a group of users in which that user is included.

Thus, since according to the invention, a user will disregard a transmission power control command if the transmission power control command is addressed by means of its identifier to more than one user, the disadvantages mentioned above can be reduced or indeed entirely eliminated.

In one embodiment of the invention, the transmission power control commands also comprise format information, and the user will also disregard a transmission power control command if the format information in the transmission power control command is not one of a predefined group of at least one format.

The invention also discloses a transceiver for use as a user terminal in a system in which the invention is applied.

### BRIEF DESCRIPTION OF THE DRAWINGS

The invention will be described in more detail in the following, with reference to the appended drawings, in which
Fig 1 shows a schematic overview of a system in which the invention may be applied, and
Figs 2 and 3 show a schematic flow chart of a method of the invention, and
Fig 4 shows a block diagram of a transceiver of the invention.

### DETAILED DESCRIPTION

The invention will in the following be described using terminology from an LTE system, Long Term Evolution. However, it should be pointed out that this is in order to facilitate the reader's understanding of the invention, and is not intended to limit the scope of protection sought for the present invention.

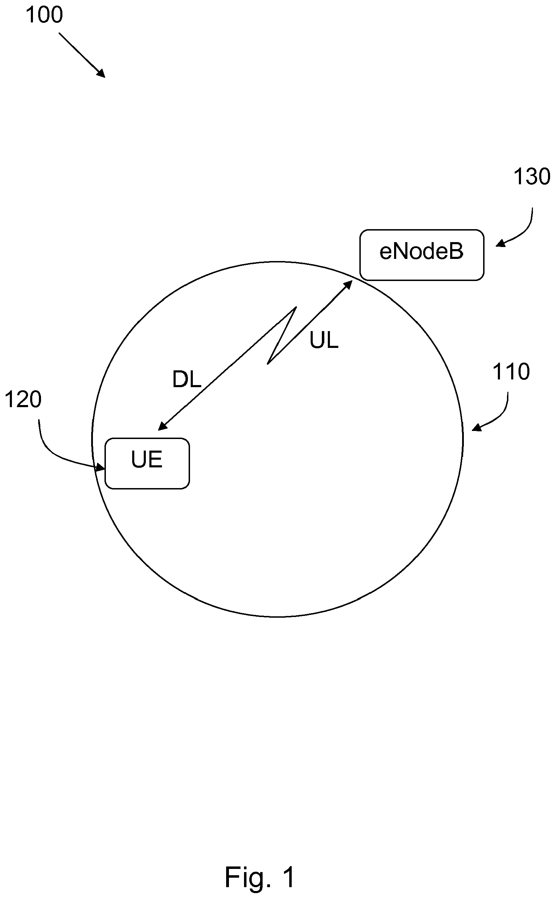

Fig 1 shows a schematic view of a system 100 in which the invention can be applied. In the system 100 there is a number of so called cells 110, each of which is arranged to accommodate a number of user terminals, "UEs", one of which is shown as 120 as an example. The cell 110 will also be associated with a controlling node 130, a so called eNodeB. The eNodeB has as one of its functions to control traffic to and from the UEs in the cell, as well as to issue certain control commands to the UEs in the cell, in order to coordinate their behaviour.

Transmissions from the UE to the eNodeB are known as uplink transmissions, UL, and transmissions from the eNodeB to the UE are known as downlink transmissions, DL.

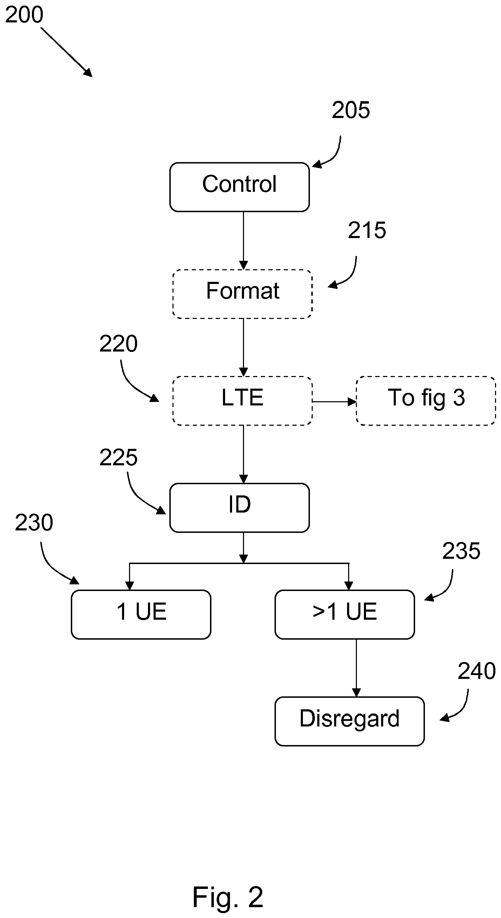

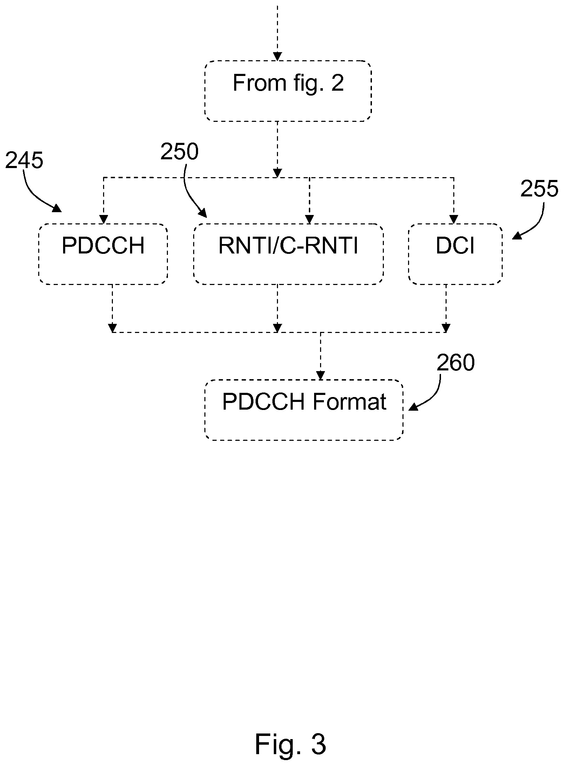

As explained previously in this text, a purpose of the present invention is to improve on the way that a terminal responds to transmission power control commands received on a downlink control channel from the eNodeB. The way that this purpose is achieved will now be explained with reference to the method 200 illustrated in the flow charts of fig 2 and 3. Steps which are options or alternative are shown with dashed lines in figs 2 and 3.

The method 200 is for use in a wireless cellular access system such as the one 100 in fig 1, and according to the method 200, users such as the one 120 in a cell 110 in the system receive one or more transmission power control commands on a control channel, as indicated in step 205 of fig 2.

As indicated in step 225 of fig 2, the transmission power control commands comprise an identifier for the intended user or users, an identifier which can be either an identifier for a specific user, as indicated in step 230, or for a group of users, as indicated in step 235.

As shown in step 240, according to the inventive method, a user disregards a transmission power control command if the identifier of the transmission power control command is for a group of users in which said user is included.

As indicated in step 215, in one embodiment, the transmission power control commands comprise format information, and the user also disregards a transmission power control commands if the format information in the transmission power control command is not one of a predefined group of at least one format. This will be elaborated on further in connection with an explanation of how the invention is applied in an LTE system.

As indicated in step 220, the method of the invention can in one embodiment be applied to an LTE system. In such a case, i.e. "an LTE embodiment", then, as indicated in step 245 in fig 3, the control channel is suitably the LTE PDCCH, Physical Downlink Control Channel, and as indicated in step 250, the identifier for the intended user or users is the RNTI or C-RNTI, (Cell) Radio Network Temporary Identifier.

In LTE, the PDCCH commands can be in differing formats, known as the DCI, Downlink Control information format; examples of LTE DCI formats are those referred to, for example, as 1A, 1, 2, 3 or 3A. As mentioned in connection with step 215, the user can also use the format in order to decide to disregard a transmission power control command, if the ID is also for a group of users. In the LTE application of the invention, it is thus the DCI format that is used for this purpose.

Some examples of this principle are as follows, with the power control command for the PUCCH comprised in the PDCCH being shown as δ_{PUCCH}:
∘ The δ_{PUCCH} from a PDCCH with DCI format 1A/1/2 and the associated RNTI being a group RNTI is ignored,

Another way of expressing this in "pseudo code" is as follows:
∘ If the UE decodes a PDCCH with DCI format 1A/1/2 and the corresponding detected RNTI equals the C-RNTI of the UE, the UE shall use the δ_{PUCCH} provided in that PDCCH,
   else
∘ if the UE decodes a PDCCH with DCI format 3/3A, the UE shall use the δ_{PUCCH} provided in that PDCCH.
   else
∘ the UE shall set δ_{PUCCH} = 0 dB.

As we have seen in the examples, the transmission power control commands for the user is preferably for a certain uplink channel, which in this example is the so called PUCCH, the Physical Uplink Control Channel.

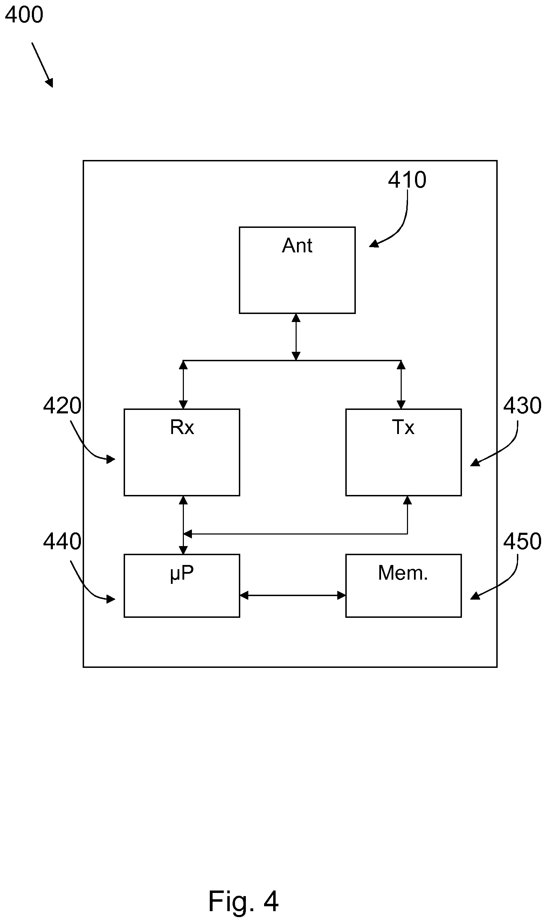

Fig 4 shows a schematic block diagram of an inventive user terminal 400. As indicated in fig 4, the user terminal 400 will comprise an antenna, shown as block 410, and will also comprise a receive part 420 and a transmit part 430. In addition, the user terminal 400 also comprises a control means 440 such as a micro processor, as well as a memory 450.

Since these main functional blocks or means of the user terminal 400 have now been introduced with their reference numbers, they may from now on simply be referred to with their reference numbers, e.g. "the means 410" instead of "the antenna 410".

As has emerged from the text above, the user terminal 400 is intended for use in a wireless cellular access system, and is equipped with the means 410 and 420 for receiving transmission power control commands on a control channel, and uses the means 440 and 450 in order to detect in those transmission power control commands an identifier for an intended user or users.

The identifier referred to here is either an identifier for a specific user or for a group of users, and the user terminal 400 uses the means 440 and 450 to disregard a transmission power control command if the identifier of the transmission power control command is for a group of users in which the user terminal itself is included.

In one embodiment, the user terminal 400 also uses the means 440 and 450 for detecting format information in the transmission power control commands, and also uses the means 440 and 450 for also disregarding a transmission power control command if the format information in the transmission power control command is not one of a predefined group of at least one format.

In one embodiment, the user terminal 400 is a user terminal for an LTE system, Long Term Evolution. In such an embodiment, the control channel is the LTE PDCCH, Physical Downlink Control Channel, and the identifier can be the RNTI Radio Network Temporary Identifier or the C-RNTI, Cell Radio Network Temporary Identifier.

Also, in one "LTE" embodiment of the user terminal 400, the identifier is the DCI format, so that one DCI format is used to address individual users, and another is used to address multiple users. In such a case, the format information can be the LTE DCI, Downlink Control Information.

The invention is not limited to the examples of embodiments described above and shown in the drawings, but may be freely varied within the scope of the appended claims.

## Claims

1. A method (200) for use in an LTE system, Long Term Evolution wireless cellular access system (100), according to which method users (120) in a cell (110) in the system (100) receive a scheduling assignment for downlink data transmission together with a transmission power control command on the LTE PDCCH, Physical Downlink Control Channel, (205) for adjusting the transmission output power of a Physical Uplink Control Channel used for transmission of positive or negative acknowledgements (ACK/NACK) of the data transmission, the transmission power control commands comprising (225) an identifier for addressing a scheduling assignment for a data transmission to the intended user or users, said identifier being either a C-RNTI for addressing of unicast data to a specific user (230) or a non-terminal specific RNTI for addressing of common data to a group of users (235), the method being **characterized in that** a user disregards (240) the transmission power control command if the identifier of the transmission power control command is for a group of users in which said user is included.

2. The method (200) of claim 1, according to which the transmission power control commands comprise (215) format information, and the user also disregards a transmission power control command if the format information in the transmission power control command is not one of a predefined group of at least one format.

3. The method (200) of claim 1 or 2, according to which (260) the identifier is the DCI format, so that one DCI format is used to address individual users, and another is used to address multiple users.

4. The method (200) of claim 3, with the format information of claim 2 being (255) the LTE DCI, Downlink Control Information.

5. A user terminal (400) for use in an LTE system, Long Term Evolution wireless cellular access system (100), being equipped with means (410, 420) for receiving a scheduling assignment for downlink data transmission together with a transmission power control command on the LTE PDCCH, Physical Downlink Control Channel, adjusting the transmission output power of a Physical Uplink Control Channel used for transmission of positive or negative acknowledgements (ACK/NACK) of the data transmission, and with means (440, 450) for detecting in said transmission power control command an identifier for addressing a scheduling decision to an intended user or users, said identifier being either a C-RNTI for addressing of unicast data to a specific user or a non-terminal specific RNTI for addressing of common data to a group of users, the user terminal being **characterized in that** it is also equipped with means (400, 450) for disregarding a transmission power control command if the identifier of the transmission power control command is for a group of users in which the user terminal itself is included.

6. The user terminal (400) of claim 5, being equipped with means (440, 450) for detecting format information in said transmission power control commands, and with means (440, 450) for also disregarding a transmission power control command if the format information in the transmission power control command is not one of a predefined group of at least one format.

7. The user terminal (400) of claim 5 or 6, in which the identifier is the DCI format, so that one DCI format is used to address individual users, and another is used to address multiple users.

8. The user terminal of claim 7, with the format information of claim 6 being the LTE DCI, Downlink Control Information.

## Patentansprüche

1. Verfahren (200) zur Verwendung in einem drahtlosen zellularen LTE-Zugriffssystem (Long Term Evolution System) (100), bei dem Verfahrensnutzer (120) in einer Zelle (110) in dem System (100) eine Planungszuordnung zur Datenübertragung in Abwärtsrichtung zusammen mit einem Sendeleistungssteuerbefehl auf dem PDCCH (Physical Downlink Control Channel) (205) des LTE zum Anpassen der Sendeausgangsleistung eines Physical Uplink Control Channel erhalten, der zum Übertragen von positiven oder negativen Bestätigungen (ACK/NACK) der Datenübertragung verwendet wird, wobei der Sendeleistungssteuerbefehl eine Kennung zum Adressieren einer Planungszuordnung für eine Datenübertragung an den vorgesehenen Benutzer oder die vorgesehenen Benutzer umfasst (225), wobei die Kennung entweder ein C-RNTI zum Adressieren von Unicast-Daten an einen spezifischen Benutzer (230) oder eine nicht-endgerätspezifische RNTI zum Adressieren von gemeinsamen Daten an eine Gruppe von Benutzern (235) ist, wobei das Verfahren **dadurch gekennzeichnet ist, dass** ein Benutzer den Sendeleistungssteuerbefehl ignoriert (240), wenn die Kennung des Sendeleistungssteuerbefehls für eine Gruppe von Benutzern ist, in die der Benutzer eingeschlossen ist.

2. Verfahren (200) nach Anspruch 1, bei dem die Sendeleistungssteuerbefehle Formatinformationen umfassen (215) und der Benutzer außerdem einen Sendeleistungssteuerbefehl ignoriert, wenn die Formatinformationen in dem Sendeleistungssteuerbefehl nicht von einer vordefinierten Gruppe von zumindest einem Format sind.

3. Verfahren (200) nach Anspruch 1 oder 2, bei dem (260) die Kennung das DCI-Format ist, sodass ein DCI-Format verwendet wird, um einzelne Benutzer zu adressieren und ein anderes verwendet wird, um mehrere Benutzer zu adressieren.

4. Verfahren (200) nach Anspruch 3, wobei die Formatinformationen nach Anspruch 2 die DCI (Downlink Control Information) des LTE sind (225).

5. Benutzerendgerät (400) zur Verwendung in einem drahtlosen zellularen LTE-Zugriffssystem (Long Term Evolution System) (100), das mit Folgendem ausgestattet ist: Mitteln (410, 420) zum Empfangen einer Planungszuordnung zur Datenübertragung in Abwärtsrichtung zusammen mit einem Sendeleistungssteuerbefehl auf dem PDCCH (Physical Downlink Control Channel) des LTE zum Anpassen der Sendeausgangsleistung eines Physical Uplink Control Channel, der zur Übertragung von positiven oder negativen Bestätigungen (ACK/NACK) der Datenübertragung verwendet wird, und mit Mitteln (440, 450) zum Erfassen einer Kennung in dem Sendeleistungssteuerbefehl zum Adressieren einer Planungsentscheidung an einen vorgesehenen Benutzer oder an vorgesehene Benutzer, wobei die Kennung entweder eine C-RNTI zum Adressieren von Unicast-Daten an einen spezifischen Benutzer oder eine nicht-endgerätspezifische RNTI zum Adressieren von gemeinsamen Daten an eine Gruppe von Benutzern ist, wobei das Benutzerendgerät **dadurch gekennzeichnet ist, dass** es außerdem mit Mitteln (400, 450) ausgestattet ist, um einen Sendeleistungssteuerbefehl zu ignorieren, wenn die Kennung des Sendeleistungssteuerbefehls für eine Gruppe von Benutzern ist, in die das Benutzerendgerät selbst eingeschlossen ist.

6. Benutzerendgerät (400) nach Anspruch 5, das mit Mitteln (440, 450) zum Erfassen von Formatinformationen in den Sendeleistungssteuerbefehlen und mit Mitteln (440, 450) ausgestattet ist, um einen Sendeleistungssteuerbefehl außerdem zu ignorieren, wenn die Formatinformationen in dem Sendeleistungssteuerbefehl nicht von einer vordefinierten Gruppe von zumindest einem Format sind.

7. Benutzerendgerät (400) nach Anspruch 5 oder 6, wobei die Kennung das DCI-Format ist, sodass ein DCI-Format verwendet wird, um einzelne Benutzer zu adressieren und ein anderes verwendet wird, um mehrere Benutzer zu adressieren.

8. Benutzerendgerät nach Anspruch 7, wobei die Formatinformationen nach Anspruch 6 die DCI (Downlink Control Information) des LTE sind.

## Revendications

1. Procédé (200) pour l'utilisation dans un système d'accès cellulaire sans fil d'évolution à long terme, système LTE, (100), procédé selon lequel des utilisateurs (120) dans une cellule (110) dans le système (100) reçoivent une affectation de programmation pour une transmission de données de liaison descendante conjointement à une instruction de commande de puissance de transmission sur le canal physique de commande de liaison descendante, LTE PDCCH, (205) pour régler la puissance de sortie de transmission d'un canal physique de commande de liaison montante utilisé pour la transmission d'accusés de réception positifs ou négatifs (ACK/NACK) de la transmission de données, les instructions de commande de puissance de transmission comprenant (225) un identificateur pour l'adressage d'une affectation de programmation pour une transmission de données à l'utilisateur ou aux utilisateurs prévus, ledit identificateur étant soit un C-RNTI pour l'adressage de données à diffusion individuelle à un utilisateur spécifique (230) soit un RNTI non spécifique au terminal pour adresser des données communes à un groupe d'utilisateurs (235), le procédé étant **caractérisé en ce qu'**un utilisateur ignore (240) l'instruction de commande de puissance de transmission si l'identificateur de l'instruction de commande de puissance de transmission est pour un groupe d'utilisateurs dans lequel ledit utilisateur est compris.

2. Procédé (200) selon la revendication 1, selon lequel les instructions de commande de puissance de transmission comprennent (215) des informations de format et l'utilisateur ignore également une instruction de commande de puissance de transmission si les informations de format dans l'instruction de commande de puissance de transmission n'est pas l'une d'un groupe prédéfini d'au moins un format.

3. Procédé (200) selon la revendication 1 ou 2, selon lequel (260) l'identificateur est le format DCI, de manière que le format DCI soit utilisé pour adresser des utilisateurs individuels et un autre est utilisé pour adresser de multiples utilisateurs.

4. Procédé (200) selon la revendication 3, dans lequel les informations de format de la revendication 2 sont (255) les informations de commande de liaison descendante, LTE DCI.

5. Terminal utilisateur (400) pour l'utilisation dans un système d'accès cellulaire sans fil d'évolution à long terme, système LTE, (100), qui est équipé de moyens (410, 420) pour recevoir une affectation de programmation pour une transmission de données de liaison descendante conjointement à une instruction de commande de puissance de transmission sur le canal physique de commande de liaison descendante, LTE PDCCH, pour régler la puissance de sortie de transmission d'un canal physique de commande de liaison montante utilisé pour la transmission d'accusés de réception positifs ou négatifs (ACK/NACK) de la transmission de données, et de moyens (440, 450) pour détecter dans ladite instruction de commande de puissance de transmission un identificateur pour l'adressage d'une affectation de programmation à un utilisateur ou des utilisateurs prévus, ledit identificateur étant soit un C-RNTI pour l'adressage de données à diffusion individuelle à un utilisateur spécifique soit un RNTI non spécifique au terminal pour adresser des données communes à un groupe d'utilisateurs, le terminal utilisateur étant **caractérisé en ce qu'**il est également équipé de moyens (400, 450) pour ignorer une instruction de commande de puissance de transmission si l'identificateur de l'instruction de commande de puissance de transmission est pour un groupe d'utilisateurs dans lequel le terminal utilisateur est compris.

6. Terminal utilisateur (400) selon la revendication 5, qui est équipé de moyens (440, 450) pour détecter des informations de format dans lesdites instructions de commande de puissance de transmission et de moyens (440, 450) pour ignorer également une instruction de commande de puissance de transmission si les informations de format dans l'instruction de commande de puissance de transmission ne sont pas l'une d'un groupe prédéfini d'au moins un format.

7. Terminal utilisateur (400) selon la revendication 5 ou 6, dans lequel l'identificateur est le format DCI, de manière que le format DCI soit utilisé pour adresser des utilisateurs individuels et un autre est utilisé pour adresser de multiples utilisateurs.

8. Terminal utilisateur selon la revendication 7, avec les informations de format de la revendication 6 qui sont les informations de commande de liaison descendante, LTE DCI.
